# EUROPEAN PATENT APPLICATION

(11) **EP 2 592 047 A1**
(43) Date of publication of application: **15.05.2013**
(21) Application number: 11306476.0
(22) Date of filing: 14.11.2011
(51) Int. Cl.: C01B 3/50, C01B 3/52, C01B 3/56

(54) **Thermally integrated process and apparatus for purification and separation of components of a synthesis gas**

(71) Applicant: L'Air Liquide Société Anonyme pour l'Etude et l'Exploitation des Procédés Georges Claude, 75007 Paris (FR); Lurgi GmbH, 60439 Frankfurt (DE)
(72) Inventor: Callens, Guylaine, 94260 Fresnes (FR); Hernandez, Antoine, 92290 Chatenay Malabry (FR); Marty, Pascal, 94360 Bry sur Marne (FR); Meyer, Manfred, 61381 Friedrichsdorf (DE); Prost, Denis, 92160 Antony (FR); Schriefl, Alexander, 110048 New Delhi (IN); Tsevery, Jean-Marc, 77127 Lieusaint (FR); Victor, Marie-Pascal, 75018 Paris (FR)
(74) Representative: Mercey, Fiona Susan

(57) **Abstract**

Process for the purification and separation of a synthesis gas stream containing hydrogen, carbon monoxide and carbon dioxide in which synthesis gas is purified in a purification unit (W) involving a methanol washing step to remove carbon dioxide, the carbon dioxide depleted synthesis gas is purified by adsorption (P) to produce a purified synthesis gas stream and the purified gas stream is sent to a cryogenic separation unit (C) where it is cooled and separated by cryogenic separation in a column of a column system, at least one stream (13, 15)enriched in hydrogen or carbon monoxide is removed from a column of the column system, warmed and divided in two, one part of the stream being removed from the cryogenic separation unit as a first stream, the other part of the stream forming a second stream (13B, 15B) and being sent to the purification unit wherein it is warmed and the warmed second stream is mixed with the first stream.

## Description

The present invention refers to a thermally integrated process and apparatus for the purification and separation of components of a synthesis gas.

The term "synthesis gas" is generally applied to gaseous mixtures which can be used to synthesize other organic compounds. In this particular case, it refers to a mixture of carbon monoxide, hydrogen, carbon dioxide as main components and methane, water, nitrogen, acid gas (CO₂), sulphides (H₂S, COS), cyanides (HCN), ammonia and heavy hydrocarbons as secondary components.

Coal (or petcoke or residue) gasification is often used to produce synthesis gas, presents many advantages with regards to operating costs and is developing more and more, especially in countries like China.

Acid gases, such as carbon dioxide and hydrogen sulphide contained in the synthesis gas are removed through a purification unit via washing by a solvent. As an example, the Rectisol ® unit (RU) is a well known physical wash process to remove acid gases and sulphides in cold methanol (-20°C ; -70°C). In this process the synthesis gas is first cooled against cold products produced by the purification unit itself, methanol being primarily injected into the synthesis gas to prevent the formation of ice. The synthesis gas is then sent to the bottom of a washing column where hydrogen sulphide and COS are removed by washing with liquid methanol solvent rich in carbon dioxide, coming from the upper part of the column. The carbon dioxide contained in the synthesis gas is absorbed by washing with clean liquid methanol at the top of the column. Purified synthesis gas, which is free from carbon dioxide and COS and hydrogen sulphide, is withdrawn at the top of the column (absorber). The methanol rich in carbon dioxide and sulphur compounds is removed at the bottom of the wash column and regenerated by a series of expansion steps down to a medium pressure, so as to produce a flash gas. The methanol rich in carbon dioxide from the upper section is also regenerated by expansion down to a lower pressure to produce a second flash gas. The medium and low pressure expansions serve to remove the acid gases from the solvent. The solvent is then further regenerated by warm regeneration so as to produce clean methanol.

The purified gas leaving the top of the absorber is then further purified by adsorption and sent to a cold box where it may be treated by washing with liquid nitrogen, liquid carbon monoxide or liquid methane or by partial condensation.

Flash gas from the cold box may be produced from a phase separator of a partial condensation step or from an intermediate distillation column.

One aim of the present invention is to optimize the heat balance (integration of cold) between the purification unit and the cold box. Two main integrated schemes can be considered depending on the cryogenic process involved.

According on an object of the invention, there is provided a process for the purification and separation of a synthesis gas stream containing hydrogen, carbon monoxide and carbon dioxide in which synthesis gas is purified in a purification unit involving a methanol washing step to remove at least carbon dioxide, the carbon dioxide depleted synthesis gas is purified by adsorption to produce a purified synthesis gas stream and the purified gas stream is sent to a cryogenic unit where it is cooled and separated by cryogenic separation in a column system, at least one stream enriched in hydrogen or carbon monoxide is produced and divided in two, one part of the stream being removed from a column of the cryogenic separation unit as a first stream, the other part of the stream forming a second stream and being sent to the purification unit wherein it is warmed and the warmed second stream is mixed with the first stream.

Optionally:
- the second stream is removed from the cryogenic separation unit at a temperature below 20°C.
- the second stream is removed from the cryogenic separation unit at a temperature above -65°C.
- the second stream is warmed in the purification unit to a temperature between -40°C and 40°C and then mixed with the first stream within the cryogenic separation unit.
- the second stream is warmed against the synthesis gas upstream of the methanol wash column scrubber and/or against an intermediate liquid side-stream or bottom liquid stream from the methanol wash column and/or against carbon dioxide depleted synthesis gas from the methanol wash column and/or against a stream removed from a flash column of the purification unit.

According to a further object of the invention, there is provided an apparatus for the purification and separation of a synthesis gas stream containing hydrogen, carbon monoxide and carbon dioxide including a purification unit comprising a methanol washing column and at least one heat exchanger, wherein synthesis gas is purified to remove carbon dioxide, an adsorption unit wherein the carbon dioxide depleted synthesis gas from the purification unit is further purified by adsorption to produce a purified synthesis gas stream, a cryogenic separation unit wherein the purified synthesis gas stream from the adsorption unit is cooled and separated by cryogenic separation in a column of a column system, means for removing at least one stream enriched in hydrogen or carbon monoxide from a column of the column system, a heat exchange line for warming the stream, means for dividing the stream into a first stream and a second stream, means for removing the first stream from the cryogenic separation unit, means for removing the second stream from the cryogenic separation unit, means for sending the second stream to the heat exchanger of the purification unit and means for removing the warmed second stream from the heat exchanger and mixing it with the first stream.

Optionally:
- the means for removing the second stream from the cryogenic separation unit are connected to the cryogenic separation unit in such a way that the second stream is sent to the heat exchanger of the purification unit at a temperature between -65°C and 20°C.
- the apparatus comprises means for sending to the heat exchanger synthesis gas upstream of the methanol wash column of the purification unit and/or against an intermediate liquid side-stream or the bottom liquid stream from the methanol wash column and/or carbon dioxide depleted synthesis gas from the methanol wash column.
- the purification unit includes a flash column and means for sending liquid from the methanol wash column to the flash column and means for sending a stream removed from the flash column to the heat exchanger of the purification unit.

The invention will be described in greater detail with reference to the attached figures. Figures 1 and 2 show the process according to the invention and Figure 3 shows the detail of a Rectisol ® type purification unit to be used in the process according to the invention.

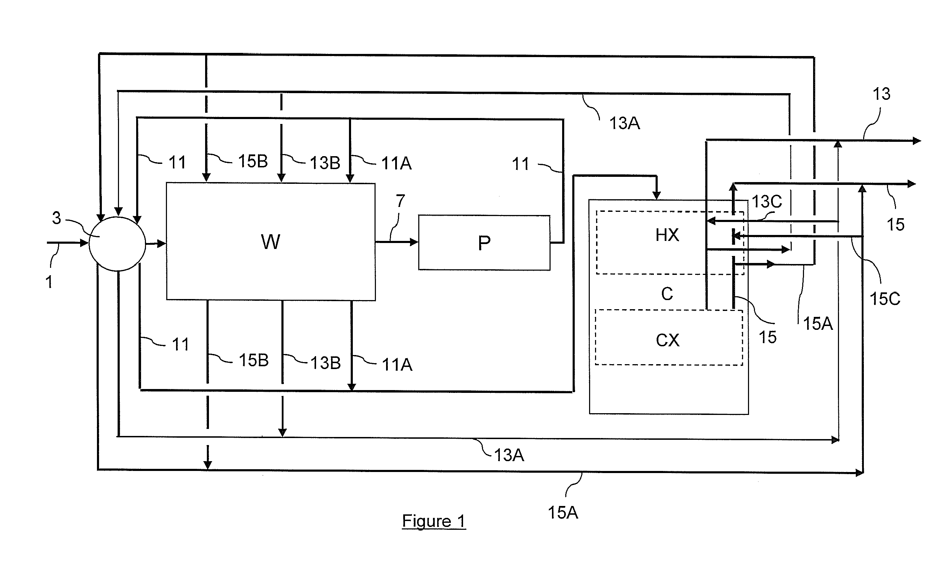

In Figure 1, one or several products from the cold box (CO, H₂, H₂+CO mixture, flash gas and/or cold box purges) are heated up to ambient temperature in an exchanger of the purification unit. The heated stream or streams is/are mixed with a corresponding stream or streams (having the same composition) at the cold box outlet or in cold box warm exchanger depending on the return temperature.

Synthesis gas 1 from a synthesis gas generation unit (not shown - gasifier as an example) is cooled in a heat exchanger 3 and sent to a purification unit W which uses a solvent washing step (methanol as an example). The synthesis gas is treated in unit W to remove acid gases, such as carbon dioxide and hydrogen sulphide. The purified synthesis gas 7 at -65°C to -35°C is sent to an adsorption unit P, to remove solvent and carbon dioxide traces, forming gas 11. Gas 11 at between -35°C and -65°C is divided into two parts. One part 11 is used to cool the synthesis gas in exchanger 3. The synthesis gas 11 is thereby warmed to a temperature around ambient, i.e. between 0°C and 45°C and is then sent to the cryogenic distillation unit C where it is cooled down from the ambient temperature in warm heat exchanger HX and cold heat exchanger CX before being separated by cryogenic distillation in a column system to form a product gas 13, such as hydrogen or carbon monoxide and a further gas 15 which is a flash gas or a purge gas, each gas being removed from a column of the column system.

The rest of gas 11 from adsorption unit P forms parts 11A which is warmed up in the purification unit W to form warmed gas 11A which is mixed with warmed gas 11 from exchanger 3 and is sent at ambient temperature to the cryogenic distillation. Gas 13A is formed by a portion of the product gas 13 of the cryogenic distillation unit but removed from the warm heat exchanger HX at between -65°C to 20°C. Gas 13A is warmed in heat exchanger 3 against the feed synthesis 1 Gas 13B is a portion of gas 13B, warmed in the purification unit and mixed with Gas 13A; The mixture is sent to the warm heat exchanger HX or downstream of the heat exchanger HX outside the cryogenic unit C.

Similarly a portion 15A of gas 15 is removed from the warm heat exchanger HX and/or the cold heat exchanger CX at between -65°C to 20°C and divided in two, part 15B being warmed in the purification unit W and part 15A being warmed in exchanger 3. The rest of stream 15 is warmed in heat exchanger HX to form a purge gas. The two warmed streams are mixed to form stream 15A and sent back to stream 15. The mixing point is either within the warm heat exchanger HX via stream 15C or downstream of the heat exchanger HX outside the cryogenic unit C.

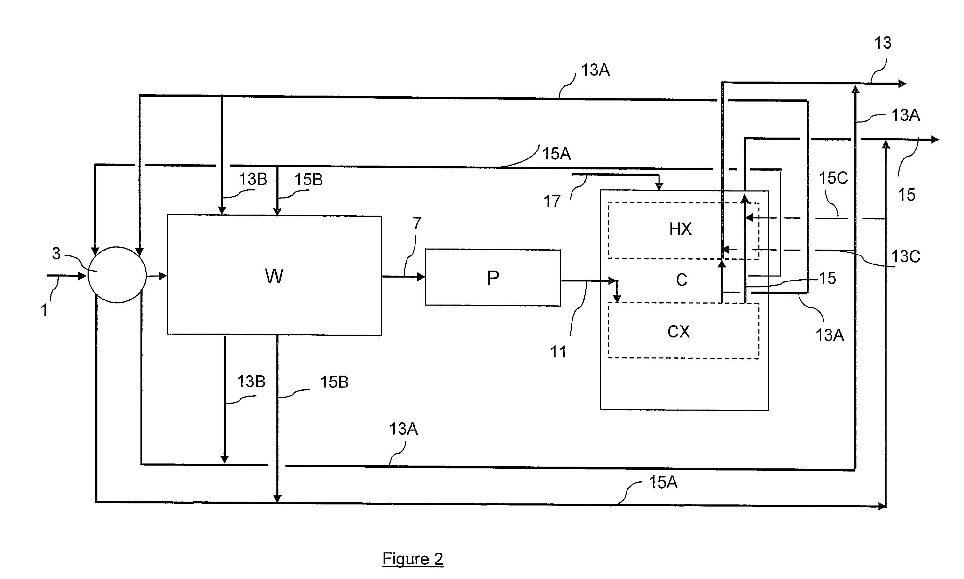

In Figure 2, the cryogenic system involves a nitrogen wash process. The synthesis gas is fed at low temperature to the adsorbers (with typical values: between -65°C and -35°C) and then is directly fed to cold heat exchanger CX of the cryogenic unit C at low temperature. Gaseous nitrogen 17 is fed to the warm exchanger HX at ambient temperature. One or several products from the cryogenic unit (H₂+N₂ mixture, flash gas and/or cold box purges) are heated up in an exchanger of the purification unit W and the heated stream or streams are mixed with corresponding stream or streams (same composition) at cold box outlet.

The synthesis gas 1 is cooled in a heat exchanger 3 and sent to a purification unit W which uses a solvent washing step The synthesis gas is treated in unit W to remove the acid gas. The purified synthesis gas 7 at between -65°C to -35°C is sent to an adsorption unit P to remove solvent and carbon dioxide traces, forming Gas 11. Gas 11 is then sent to the cryogenic unit C where it is cooled in cold heat exchanger CX. Then it is separated by cryogenic process to form a product gas 13 which is a mixture of H₂ and N₂ and a further gas 15 which is a flash gas or a purge gas, having been warmed in cold exchanger CX and warm exchanger HX.

Gas 13A is formed by a portion of the product gas 13 of the cryogenic unit but removed from the warm heat exchanger HX at between -65°C to 20°C. It is separated in two parts 13A, 13B. Gas 13A is warmed in heat exchanger 3 against the feed synthesis gas 1 and then mixed with gas 13B which has been warmed in unit W. The mixture formed 13A is then re-mixes with gas 13 from the cryogenic unit C either as stream 13C sent to the warm heat exchanger HX or downstream of the heat exchanger HX outside the cryogenic unit C.

Similarly a portion 15A of gas 15 is removed from the warm heat exchanger HX at between -65°C to 20°C or upstream of heat exchanger HX and divided in two, part 15B being warmed in the purification unit W and part 15A being warmed in exchanger 3. The rest of stream 15 is warmed in heat exchanger HX to form a purge stream; The two warmed streams are mixed to form stream 15A and sent back to stream 15. The mixing point is either within the warm heat exchanger HX via stream 15C or downstream of the heat exchanger HX outside the cryogenic unit C.

Gaseous nitrogen 17 at ambient temperature is cooled in the cold and warm heat exchangers CX, HX against gases 13, 15 to form liquid nitrogen to be used in a nitrogen washing process.

This allows the size of the warm exchanger HX to be reduced.

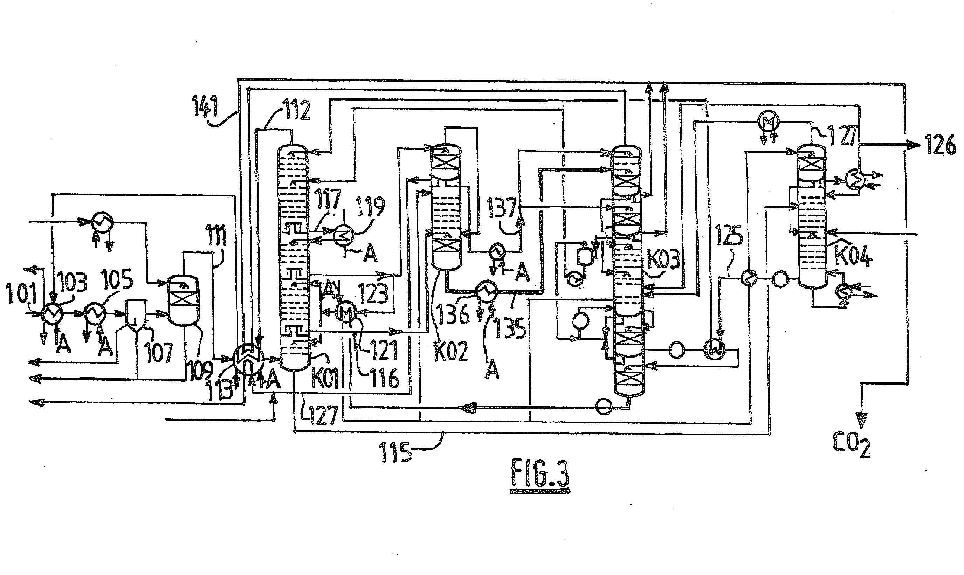

Figure 3 illustrates a Rectisol ® process for acid gas removal with indication of locations for warming cold gases 11, 11A, 13A, 13B, 15A and 15B (mentioned as gas A in Figure 3). The process removes carbon dioxide and hydrogen sulphide, in particular. The solvent used is chilled methanol with the advantages of ready availability, high stability and high solubility characteristics for CO₂, H₂S and COS meaning that the solvent circulation rate is relatively small compared to other wash systems. This results in low utility consumption figures (steam, cooling water, electricity... ). The Rectisol ® process is especially suitable for high sour gas concentrations and high pressures. The apparatus includes a methanol absorption column K01 for removing CO₂ and/or H₂S, a regeneration column K02 also called MP flash column, a low-pressure flash regeneration column K03 and a hot regenerator column K04.

The raw synthesis gas 101 is cooled in a series of heat exchangers 103, 105, 113. In the first heat exchanger 103, the raw feed gas is cooled against cold synthesis gas A coming from the cryogenic unit C, for example a liquid nitrogen wash unit, and against the purified gas 112 exiting the H₂S/CO₂ absorption column K01. In the second heat exchanger 105, the raw feed gas is cooled against colder fluid A from the cryogenic unit. The condensed water and BTX/naphtha are then separated in a gas separator 107 and sent to battery limits. Water is removed from the feed gas in order to avoid water build-up in the methanol loop: if the water content is too high, solubility of methanol drops. A water wash column 109 is included to remove NH3. The gas 111 is sent to a third cooling step in exchanger 113. In the exchanger 113, the gas 111 is then further cooled against gas A from the cryogenic unit C, against the purified gas 112 exiting the H₂S/CO₂ absorption column K01 and against CO₂ product 141 coming from the re-absorber CO₂ product column K03. Additionally the gas may be cooled against recycle top gas 127 coming from the MP flash column K02. The cooled gas 111 is then sent to the H₂S/CO₂ absorption column K01.

The gas is sent to the bottom pre-wash section of the absorption column K01 where trace components like NH₃, and HCN and BTX are absorbed with a small stream of CO₂-sub-cooled-laden methanol. The pre-wash methanol 115 leaves the bottom of the absorption column K01 and is sent to the hot regenerator column K04.

The synthesis gas is then routed up via a chimney tray into the H₂S-absorption section of the absorption column K01 (bottom section) where H₂S and COS are removed by dissolution in CO₂-saturated methanol coming from the CO₂-absorbtion section (top section). The methanol solvent is fed to the top of the Absorption section on flow control proportional to the inlet gas flow. The CO₂+H₂S-laden methanol 116 leaves the main sump of the Absorber column K01 and is routed to the MP-Flash Column K02 for regeneration. The de-sulfurised gas then enters the lower washing part of the CO₂-absorption section via another chimney tray. An additional sulphur-free feed gas stream may also be fed to the column at this point.

In the CO₂-absorption section, the gas is washed with cold, flash regenerated methanol used as main wash methanol and with cold, hot regenerated methanol used as fine wash methanol. Due to the heat of absorption of the CO₂, the methanol 117, 123 is heated up considerably and needs to be cooled on its way down the column. Therefore, in the lower part of the CO₂-absorbtion section, the gas is scrubbed with CO₂-laden methanol which is cooled against gas A from the cryogenic unit C in exchangers 119, 121. The cold purified gas 112 exiting the Absorber K01 is then routed to the adsorption unit P of Figures 1 and 2.

The bottom liquid 135 from flash column K02 is sent to the top of column K03 following cooling in exchanger 136 against stream A.

The LP flash column K03 receives the bottom liquid 135 and 137 from column K02 and produces a CO₂ rich stream 141 and an off-gas stream, which is sent to the atmosphere. In hot regenerator K04 the methanol is finally regenerated by stripping with methanol vapours. The overheads being an acid gas with sulphur content suitable to be processed in a Claus sulphur recovery unit. The bottoms product, stream 125, is the finewash methanol fed on top of absorber K01.

The stream A is thus used to cool at least one of the following fluids: methanol removed at an intermediate point of the absorption column K01, synthesis gas which is to be treated in absorption column K01, bottom liquid from the MP flash column K02, which then feeds the LP flash column K03.

Advantages :
- reduction of the adsorbent volume, of the drying bottle size, of the bed regeneration flowrate and of the regeneration heater steam consumption, as impurity adsorption is improved at low temperature.
- reduction of the cold box warm exchanger size
- optimization of the purification unit heat balance, the unit operating at a lower temperature, thanks to the additional refrigeration available at the cold box outlet.
- optimization of the overall purification unit efficiency and cold box energy consumption (power consumption of frigorific cycle compressor and/or LIN consumption).

## Claims

1. Process for the purification and separation of a synthesis gas stream containing hydrogen, carbon monoxide and carbon dioxide in which synthesis gas is purified in a purification unit (W) involving a methanol washing step to remove at least carbon dioxide, the carbon dioxide depleted synthesis gas is purified by adsorption to produce a purified synthesis gas stream and the purified gas stream is sent to a cryogenic unit (c) where it is cooled and separated by cryogenic separation in a column system, at least one stream (13, 15) enriched in hydrogen or carbon monoxide is produced and divided in two, one part of the stream being removed from a column of the cryogenic separation unit as a first stream, the other part of the stream forming a second stream (13B, 15B) and being sent to the purification unit wherein it is warmed and the warmed second stream is mixed with the first stream.

2. Process according to Claim 1 wherein the second stream is removed from the cryogenic separation unit at a temperature below 20°C.

3. Process according to Claim 2 wherein the second stream is removed from the cryogenic separation unit at a temperature above -65°C.

4. Process according to Claim 1 or 2 wherein the second stream is warmed in the purification unit (W) to a temperature between -40°C and 40°C and then mixed with the first stream within the cryogenic separation unit (C).

5. Process according to any preceding claim wherein the second stream is warmed against the synthesis gas upstream of the methanol wash column (K01) and/or against an intermediate liquid side-stream or bottom liquid stream from the methanol wash column and/or against carbon dioxide depleted synthesis gas from the methanol wash column and/or against a stream removed from a flash column (K02) of the purification unit.

6. Apparatus for the purification and separation of a synthesis gas stream containing hydrogen, carbon monoxide and carbon dioxide including a purification unit (W) comprising a methanol washing column (K01) and at least one heat exchanger (113, 121, 136), wherein synthesis gas is purified to remove carbon dioxide, an adsorption unit (P) wherein the carbon dioxide depleted synthesis gas from the purification unit is further purified by adsorption to produce a purified synthesis gas stream, a cryogenic separation unit (C)wherein the purified synthesis gas stream from the adsorption unit is cooled and separated by cryogenic separation in a column of a column system, means for removing at least one stream enriched in hydrogen or carbon monoxide from a column of the column system, a heat exchange line (HX, CX) for warming the stream, means for dividing the stream into a first stream and a second stream, means for removing the first stream from the cryogenic separation unit, means for removing the second stream from the cryogenic separation unit, means for sending the second stream to the heat exchanger of the purification unit and means for removing the warmed second stream from the heat exchanger and mixing it with the first stream.

7. Apparatus according to Claim 6 wherein the means for removing the second stream from the cryogenic separation unit (C) are connected to the cryogenic separation unit in such a way that the second stream is sent to the heat exchanger of the purification unit at a temperature between -65°C and 20°C.

8. Apparatus according to any of Claims 6 or 7 comprising means for sending to the heat exchanger (113, 121, 136) synthesis gas upstream of the methanol wash column (K01) of the purification unit and/or against an intermediate liquid side-stream or the bottom liquid stream from the methanol wash column and/or carbon dioxide depleted synthesis gas from the methanol wash column.

9. Apparatus according to any of Claims 6 to 8 wherein the purification unit includes a flash column (K02) and means for sending liquid from the methanol wash column (K01) to the flash column and means for sending a stream removed from the flash column to the heat exchanger (136) of the purification unit.
